# EUROPEAN PATENT SPECIFICATION

(11) **EP 1 810 565 B1**
(45) Date of publication and mention of the grant of the patent: **19.06.2013**
(21) Application number: 06008594.1
(22) Date of filing: 26.04.2006
(51) Int. Cl.: A01K 39/01

(54) **Cover for bird feeder**
Deckel für Vogelfutterspender
Couvercle d'une mangeoire pour oiseau

(30) Priority: 20.01.2006 CA 2533482
(43) Date of publication of application: 25.07.2007
(73) Proprietor: Cote, Paul, Knowlton QC J0E 1VO (CA)
(72) Inventor: Cote, Paul, Knowlton QC J0E 1VO (CA)
(74) Representative: Graf Glück Kritzenberger

(56) References cited:
- US-A- 5 406 908
- US-A1- 2003 226 514
- US-A1- 2004 031 443
- US-B1- 6 253 707

## Description

### FIELD OF THE INVENTION

The present invention relates to bird feeders and more particularly, relates to selective bird feeders.

### BACKGROUND OF THE INVENTION

Selective bird feeders are well known in the art and they are designed to limit the maximum size of a bird or animal which can access the seeds in the feeder. There are many reasons for excluding certain birds and animals including the fact that for many people, certain bird species may be regarded as undesirable. Many people only wish to have smaller birds present at the feeder and not many of the larger birds. Thus, some of the larger birds such as crows, grackles, blue jays, and the like are considered by a segment of the population to be undesirable.

A further problem associated with bird feeders is that some of the larger birds and animals which gain access to the seeds can devour a large quantity thereof in a relatively short period of time. Again, for many people, this is considered to be undesirable as the cost of maintaining the feeder full exceeds the capability of the person to purchase the seeds. Furthermore, many of these larger birds and animals can create quite a mess as they often tend to merely throw the seeds on the ground.

One animal in particular which many people consider undesirable is the squirrel. However, the squirrels are well known for their ability to overcome most of the devices designed to prevent them from reaching the seeds.

In order to overcome these problems, many feeders have a mechanism which renders them more or less squirrel proof. Generally, these arrangements utilize a movable shroud which moves into and out of a position whereby the seed can be accessed. Typically, such bird feeders utilize an arrangement wherein one of the shroud or seed tube is biased by a spring such that when a larger weight lands on the shroud, the shroud moves relative to the seed tube. An important component of such squirrel proof bird feeders is the cover member which must be designed to cooperate with the moveable shroud while also permitting ready access to the seed tube for filling of the same.

US 2003/0226514 A1 discloses a squirrel proof bird feeder according to the preamble of independent claim 1.

US 5,406,908 discloses a stackable modular bird feeder

A bird feeder according to US 2004/0031443 refers to a releasable removable base for refilling the feeder.

### SUMMARY OF THE INVENTION

It is an object of the present invention to provide a cover arrangement suitable for use with a squirrel proof bird feeder and which cover arrangement provides for secure locking of the same while permitting easy removal thereof.

According to the present invention there is provided a squirrel proof bird feeder having a feed tube and a shroud surrounding at least a portion of the feed tube, and a cover, the improvement comprising an arrangement wherein the cover has at least one downwardly extending wall, a protrusion formed on an inwardly facing surface of the downwardly extending wall, a side wall of at least one of the feed tube and shroud having a key way to permit entry of the protrusion, the key way having a vertical entry way, a horizontal portion, and an upper recessed portion and the bird feeder having biasing means to bias the cover upwardly, according to the characterising portion of independent claim 1.

According to the present invention, the cover may be attached to either the feed tube or the shroud or alternatively, to a member seated on top of one of the seed tube or shroud. A locking arrangement between the cover and the seed tube/shroud is provided which biases the cover into a locking arrangement.

As previously discussed, the key way includes an entry, a lead in portion, and an upper recessed portion. The lead in permits the protrusion on the cover to pass downwardly as the cover is placed in position. Thus, the entry is vertical or in a generally vertical position though a diagonally extending entry could also be employed.

The recessed portion maintains the protrusion in position to effectively lock the cover to a body portion of the bird feeder.

Extending between the entry and the recessed portion is a lead in portion. This lead in portion may be generally horizontal though, as will be understood by those knowledgeable in the art, the lead in portion may extend somewhat diagonally. Indeed, the entry and the lead in portions may be combined into a single entity extending diagonally within the wall and this arrangement is considered equivalent to the disclosed embodiment.

The key way may be formed in the feed tube, in the shroud, or in a separate member which is attached to either the shroud or feed tube. A preferred embodiment comprises a collar sitting on top of the shroud and secured thereto. The collar can have an inner and outer wall, with the outer wall having a pair of key ways formed therein as will be described in the embodiment illustrated in the drawings.

The biasing means are effective to exert an upward pressure on the cover when it is in the locked position. Conveniently, a plurality of biasing members may be employed with each biasing member having a shaft enclosed in a recess with a coil spring extending thereabout. The coil spring will exert an upward pressure on a head portion of the biasing member.

In an alternative embodiment, the biasing member may exert a biasing force on the underside of a central portion of the cover. This arrangement is particularly suitable for bird feeders which have a centrally located post interiorly of the feed container.

### BRIEF DESCRIPTION OF THE DRAWINGS

Having thus generally described the invention, reference will be made to the accompanying drawings illustrating embodiments thereof, in which:
- Figure 1: is a sectional view of a cover arrangement for a bird feeder according to one embodiment of the present invention;
- Figure 2: is a perspective view of collar portion of the embodiment of Figure 1;
- Figure 3: is a cross sectional view of the cover and collar illustrating the biasing of the cover;
- Figure 4: is an exploded view of a cover and collar according to an embodiment which does not form a part of the present invention;
- Figure 5: is view similar to Figure 4 with a portion of the collar being cut away;
- Figure 6: is cross sectional view through the upper portion of a bird feeder having the cover and collar of Figures 4 and 5;
- Figure 7: is an exploded view of a further embodiment of the present invention;
- Figure 8: is an exploded view of a variation of the embodiment of Figure 7;
- Figure 9: is a further variation of the embodiment of Figure 7; and
- Figure 10: is an exploded view of a still further variation thereof.

### DETAILED DESCRIPTION OF THE INVENTION

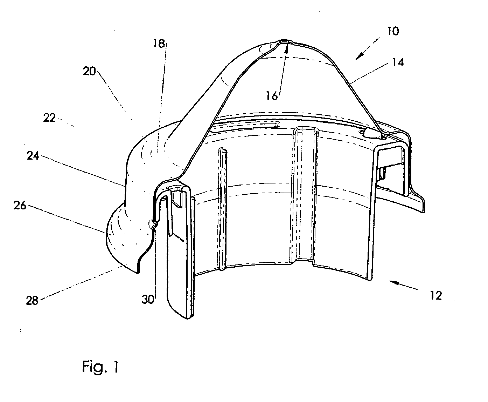

Referring to the drawings in greater detail and by reference characters thereto, there is illustrated in Figures 1 to 3 a first embodiment of the present invention which will now be described.

As may be seen in Figure 1, there is provided a cover generally designated by reference numeral 10 along with a ring or collar generally designated by reference numeral 12.

Cover 10 includes an upper dome portion 14 which has a centrally located aperture 16 therein through which a cable or other hanging means may extend. Dome portion 14 merges, at its lower end, with a concave arcuate transition portion 18 which in turn merges with a horizontal portion 20. At its outer extremity, horizontal portion 20 merges with a convex arcuate transition portion 22 which leads to a substantially vertical side wall 24. From side wall 24, there is provided a further concave arcuate transition portion 26 and which terminates in a drip edge 28. As will be noted, there are provided a plurality of dimples or projections 30 on side wall 24.

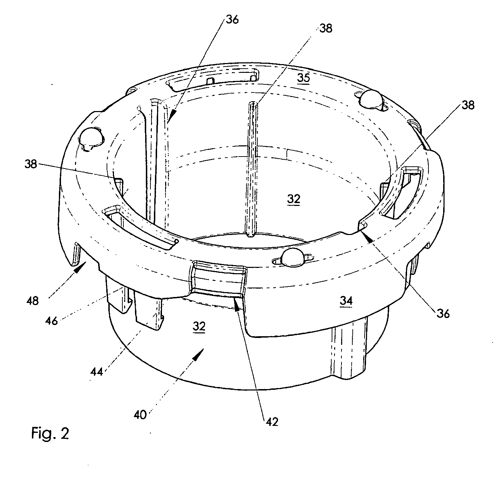

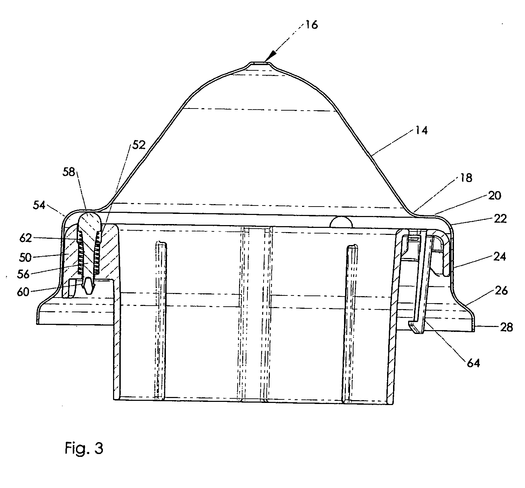

Collar 12 is best illustrated in Figures 2 and 3 and reference will now be had thereto. Collar 12 includes an inner side wall 32, an outer side wall 34, and a top wall 35 extending between inner side wall 32 and outer side wall 34. On the interiorly facing surface of inner side wall 32, there are provided a pair of vertical recesses 36 for reasons which are best set forth EP patent application EP 1 723 848 A1 filed in the name of Paul Cote contemporaneously with the present application. Similarly, there are provided a plurality of centering ribs 38 for a feed tube (not shown). In outer side wall 34, there is provided a key way generally designated by reference numeral 40 and which includes an entry way 42, a first ramped portion 44 formed on the lower marginal edge of inner side wall 32, a horizontal edge 46, and a recess portion 48. Thus, key way 40 is designed to receive a dimple or protrusion 30 and as the cover is placed in position, dimple or protrusion 30 will slide along ramped portion 44 and horizontal portion 46 of the lower marginal edge of inner side wall 32 to seat within recess portion 48.

As best seen in Figure 3, in intermediate inner side wall 32 and outer side wall 34 there are provided solid portions or sections 50 which have an interior recess 52. A biasing member 54 fits within recess 52 and includes a stem 56, an enlarged head 58, and a lower stop portion 60. Extending about stem 56 is a coil spring 62. Thus, the biasing member 54 is urged upwardly to seat against horizontal section 20 of cover 10 and urge the same to maintain a locked position wherein dimple 30 is seated within recess portion 48.

A plurality of attaching hooks 64 are provided for securing collar 12 to a shroud.

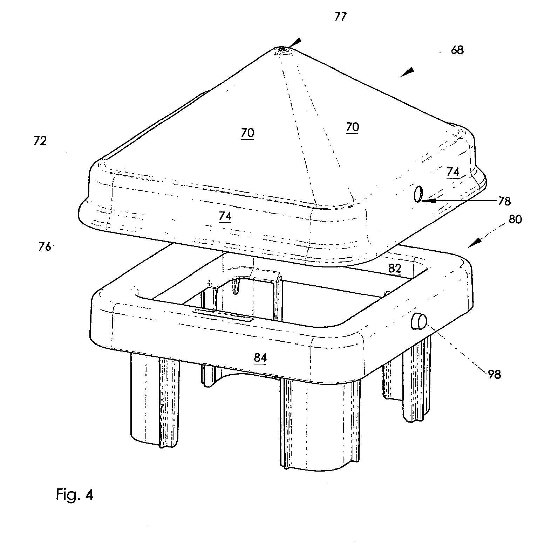

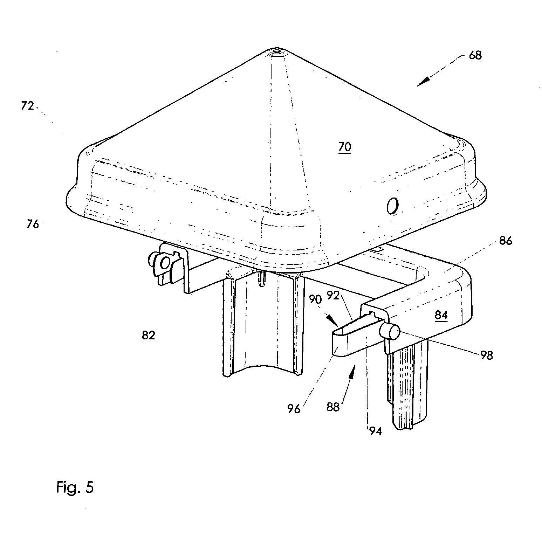

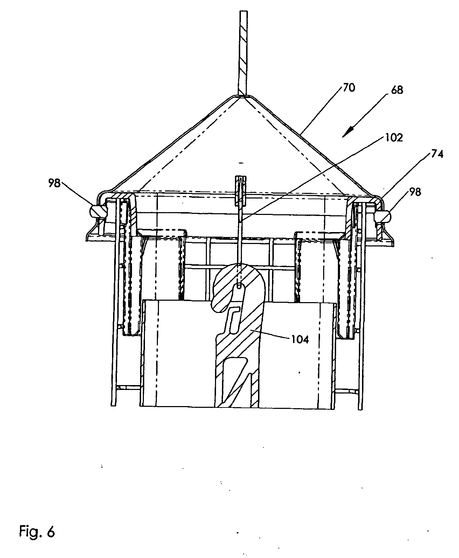

Turning to the embodiment of Figures 4 to 6, there is illustrated therein a cover 68 and a collar generally designated by reference numeral 80. This embodiment does not form a part of the claimed invention.

Collar 68 includes a plurality of sloped panels 70 each having a concave arcuate transition portion 72 which merges with a substantially vertical side wall 74. At the end of side wall 74, there is provided a drip edge 76.

Located centrally of sloped panels 70 is an aperture 77 through which a cable or hanging member may pass. As will be seen in the drawings, there are provided apertures 78 in two of the side wall panels 74.

Collar 80 includes an inner wall 82, an outer wall 84 and a top wall 86 extending between inner wall 82 and outer wall 84. Also mounted between inner wall 82 and outer wall 84 is a biasing means generally designated by reference numeral 88.

Biasing means 88 comprises a U-shaped resilient member 90 having first and second legs 92, 94 joined together by a bight 96. On second leg 94, at one end thereof, there is provided a button 98 which is sized to fit within an aperture 78 in side wall 74 of cover 68.

The bird feeder will include a shroud as is shown in EP patent application EP 1 723 848 A1 filed in the name of Paul Cote contemporaneously with the present application. A cable 102 is provided for hanging the feeder which is attached to an inner post 104.

Thus, as may be seen, by depressing the button 98, the cover is free to be removed and access may be had to an interior feed tube.

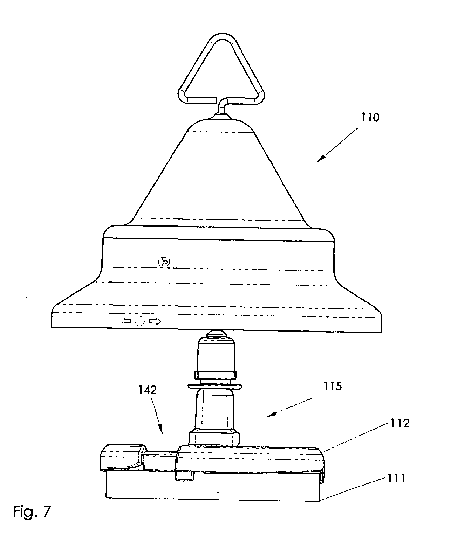

An alternative embodiment is illustrated in Figure 7 wherein reference numerals in the hundreds are employed. In this arrangement, there is provided a cover 110 which seats within a key way 142 formed in collar 112. However, in this instance, cover 112 is placed on a feed tube 111. A biasing arrangement 115 is provided.

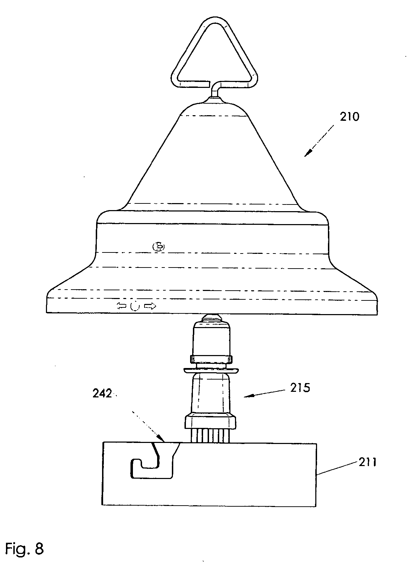

In the embodiment of Figure 8, a cover 210 is designed to fit directly on a seed tube 211 which has a key way 242 formed therein. Again, a central biasing means 215 is provided.

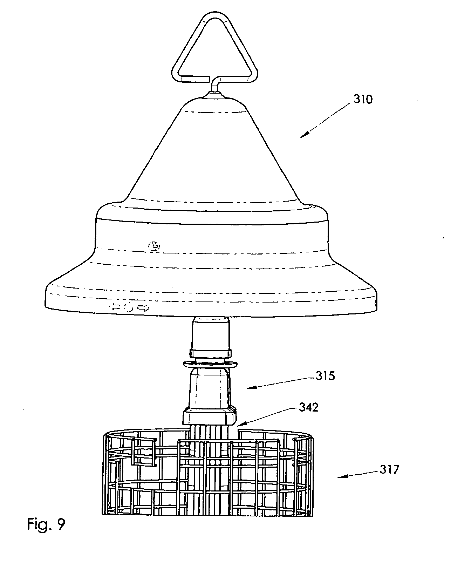

In the embodiment of Figure 9, a cover 310 is designed to seat directly on a shroud 317 having key way 342 therein. Again, a central biasing means 315 is provided.

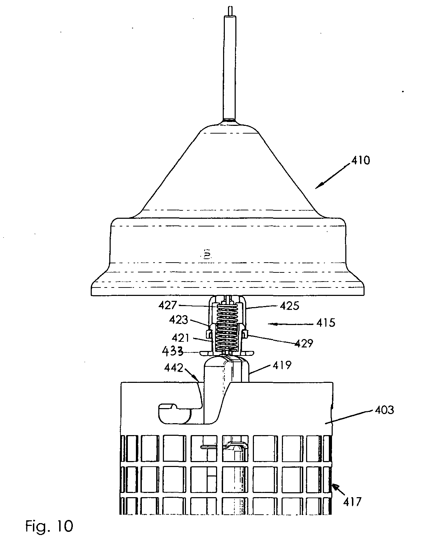

In Figure 10, a cover 410 is designed to seat directly on a shroud 417. In this embodiment, shroud 417 has a solid upper portion 403 which has a keyway 442 formed therein.

Biasing means 415 includes a lower housing having a base 433 which is designed to sit on cover 419 which covers a central tube in the bird feeder. Extending upwardly from base 433 is a wall 421 which has an enlarged portion 423 at a distal end thereof. An upper housing 425 also has, at its lower end, inwardly extending flanges 429 while interiorly of wall 421, there is provided a biasing spring 427 which will push the upper housing 425 upwardly to seat against the upper portion of cover 410.

It will be understood that the above described embodiment is for purposes of illustration only and changes and modifications may be made thereto without departing from the scope of the invention as defined by the appended claims.

## Claims

1. A squirrel proof bird feeder having a feed tube and a shroud surrounding at least a portion of said feed tube, and a cover (10, 110, 210, 310, 410), which cover comprises an upper portion (14), at least one downwardly extending wall (24) from said upper portion (14), and a protrusion (30) formed on an inwardly facing surface of said downwardly extending wall (24), a side wall (34) of one of said feed tube and shroud has a keyway (40, 142, 242, 342, 442) to permit entry of said protrusion (30), said keyway (40) has a generally vertical entry (42), a lead in portion (44) and an upper recessed portion (48), **characterized in that** said bird feeder has biasing means comprising a biasing member (54, 425) being urged upwardly by a spring biasing member (62, 427) to exert an upward pressure on said cover (10) and maintain a locked position wherein the protrusion (30) is seated within said recessed portion (48) and said spring biasing member (62, 427) being mounted on a central post located inwardly of said feed container of said bird feeder or a plurality of said spring biasing members being formed in a collar (12, 112) of said bird feeder.

2. A squirrel proof bird feeder of Claim 1, wherein said keyway (342, 442) is formed in an upper side wall portion of said shroud (317, 417).

3. A squirrel proof bird feeder of Claim 1, wherein said keyway (242) is formed in an upper wall portion of said feed tube (211).

4. A squirrel proof bird feeder of Claim 1, wherein said bird feeder includes a collar (12) on an upper wall portion of said shroud, said keyway (40) being formed in said collar (12).

5. A squirrel proof bird feeder of Claim 1 wherein said bird feeder includes a collar (112) on an upper portion of said feed tube (111), said keyway (142) being formed in said collar (112).

## Patentansprüche

1. Eichhörnchensicherer Vogelfutterspender aufweisend eine Futterröhre und eine die Futterröhre zumindest teilweise umgebende Hülle, und einen Deckel (10, 110, 210, 310, 410), wobei der Deckel einen oberen Abschnitt (14), zumindest eine sich vom oberen Abschnitt (14) nach unten erstreckende Wand (24), und einen an einer nach innen weisenden Oberfläche der sich nach unten erstreckenden Wand (24) ausgebildeten Vorsprung (30) aufweist, wobei eine Seitenwand (34) der Futterröhre oder der Hülle mit einer Nut (40, 142, 242, 342, 442) für den Eingriff des Vorsprungs (30) ausgestattet ist, wobei die Nut (40) eine hauptsächlich vertikale Eingangsöffnung (42), einen Einführabschnitt (44) und einen oberen vertieften Abschnitt (48) aufweist, **dadurch gekennzeichnet, dass** der Vogelfutterspender über Spannungsmittel verfügt, welche ein durch ein Federvorspannungselement (62, 427) nach oben gedrängtes Spannungselement (54, 425) aufweisen, um einen nach oben gerichteten Druck auf den Deckel (10) auszuüben und eine geschlossenen Stellung beizubehalten, wobei der Vorsprung (30) in dem vertieften Abschnitt (48) sitzt und das Federvorspannungselement (62, 427) an einer zentralen, innen im Futterbehälter des Vogelfutterspenders angeordneten Stelle befestigt ist oder eine Vielzahl von Federvorspannungselementen in einem Kragen (12, 112) des Vogelfutterspenders ausgebildet sind.

2. Eichhörnchensicherer Vogelfutterspender nach Anspruch 1, wobei die Nut (342, 442) in einem oberen Seitenwandabschnitt der Hülle (317, 417) ausgebildet ist.

3. Eichhörnchensicherer Vogelfutterspender nach Anspruch 1, wobei die Nut (242) in einem oberen Wandabschnitt der Futterröhre (211) ausgebildet ist.

4. Eichhörnchensicherer Vogelfutterspender nach Anspruch 1, wobei der Vogelfutterspender einen Kragen (12) an einem oberen Wandabschnitt der Hülle aufweist, wobei die Nut (40) in dem Kragen (12) ausgebildet ist.

5. Eichhörnchensicherer Vogelfutterspender nach Anspruch 1, wobei der Vogelfutterspender einen Kragen (112) an einem oberen Abschnitt der Futterröhre (111) aufweist, wobei die Nut (142) in dem Kragen (112) ausgebildet ist.

## Revendications

1. Mangeoire à oiseaux procurant une protection contre les écureuils, possédant un tube d'alimentation et une enveloppe entourant au moins une portion dudit tube d'alimentation, et un couvercle (10, 110, 210, 310, 410), ledit couvercle comprenant une portion supérieure (14), au moins une paroi (24) s'étendant vers le bas à partir de ladite portion supérieure (14) et une saillie (30) formée sur la surface, orientée vers l'intérieur, de ladite paroi (24) s'étendant vers le bas, une paroi latérale (34), soit dudit tube d'alimentation, soit de ladite enveloppe, possédant une rainure de clavette (40, 142, 242, 342, 442) pour procurer une entrée à ladite saillie (30), ladite rainure de clavette (40) possédant une entrée généralement verticale (42), un angle d'inclinaison dans la portion (44) et une portion supérieure évidée (48), **caractérisée en ce que** ladite mangeoire à oiseaux possède un moyen de mise en état de précontrainte comprenant un membre de mise en état de précontrainte (54, 425) pressé vers le haut par un membre de mise en état de précontrainte sous la forme d'un ressort (62, 427) afin d'exercer une pression ascendante sur ledit couvercle (10) et de maintenir une position verrouillée dans laquelle la saillie (30) vient se loger au sein de ladite portion évidée (48), et ledit membre de mise en état de précontrainte sous la forme d'un ressort (62, 427) est monté sur un montant central disposé à l'intérieur dudit récipient d'alimentation de ladite mangeoire à oiseaux ou bien plusieurs desdits membres de mise en état de précontrainte sous la forme d'un ressort sont réalisés dans un manchon (12, 112) de ladite mangeoire à oiseaux.

2. Mangeoire à oiseaux procurant une protection contre les écureuils selon la revendication 1, dans laquelle ladite rainure de clavette (342, 442) est réalisée dans une portion supérieure de la paroi latérale de ladite enveloppe (317, 417).

3. Mangeoire à oiseaux procurant une protection contre les écureuils selon la revendication 1, dans laquelle ladite rainure de clavette (242) est réalisée dans une portion supérieure de paroi dudit tube d'alimentation (211).

4. Mangeoire à oiseaux procurant une protection contre les écureuils selon la revendication 1, dans laquelle ladite mangeoire englobe un manchon (12) sur la portion supérieure de paroi de ladite enveloppe, ladite rainure de clavette (40) étant réalisée dans ledit manchon (12).

5. Mangeoire à oiseaux procurant une protection contre les écureuils selon la revendication 1, dans laquelle ladite mangeoire englobe un manchon (112) sur la portion supérieure dudit tube d'alimentation (111), ladite rainure de clavette (142) étant réalisée dans ledit manchon (112).
